**Europäisches Patentamt**

**European Patent Office**

**Office européen des brevets**

(19)

(11) Veröffentlichungsnummer: **0 007 649**

**A1**

(12) # EUROPÄISCHE PATENTANMELDUNG

(21) Anmeldenummer: **79200233.9**

(22) Anmeldetag: **11.05.79**

(51) Int. Cl.³: **C 25 D 13/06**
**C 08 L 13/02**

(30) Priorität: **27.07.78 DE 2832992**

(43) Veröffentlichungstag der Anmeldung:
**06.02.80 Patentblatt 80/3**

(84) Benannte Vertragsstaaten:
**AT BE CH DE FR GB IT NL SE**

(71) Anmelder: **METALLGESELLSCHAFT Aktiengesellschaft**
**Reuterweg 14**
**D-6000 Frankfurt am Main 1(DE)**

(72) Erfinder: **Quack, Günther, Dr. Dipl.-Chem.**
**An der Kreuzwiese 47a**
**D-6370 Oberursel 5(DE)**

(74) Vertreter: **Fischer, Ernst, Dr.**
**Reuterweg 14**
**D-6000 Frankfurt am Main 1(DE)**

(54) **Wässriges Überzugsmittel.**

(57) In wäßrigen Überzugsmitteln, insbesondere anionisch abscheidbaren Überzugsmitteln, sind polymere Filmbildner enthalten, die durch Neutralisation mit einer organischen oder anorganischen Base wasserlöslich oder -dispergierbar gemacht sind, wobei die Überzugsmittel neben Wasser gegebenenfalls noch weitere Zusätze enthalten.

Zwecks Verbesserung von Umgriff und Korrosionsschutzwirkung solcher Polymere besteht der polymere Filmbildner aus einem Copolymerisat aus 40 bis 90 % konjugiertem, 4 bis 8 C-Atome aufweisendem Dien und 10 bis 60 % copolymerisierbarer, äthylenisch ungesättigter, carboxylgruppentragender Verbindung.

EP 0 007 649 A1

Croydon Printing Company Ltd.

- 1 -

METALLGESELLSCHAFT          Frankfurt/M., 29. Mai 1978
Aktiengesellschaft          DrMl/HGa
6000 Frankfurt/M.

prov. Nr. 8279 M

### Wäßriges Überzugsmittel

Die Erfindung betrifft ein wasserlösliches oder wasserdispergierbares Überzugsmittel, das insbesondere in der Elektrotauchlackierung verwendet wird und das ausgezeichnete Haftfestigkeit und Korrosionsschutzeigenschaften aufweist.

Es sind wasserlösliche Bindemittel auf Basis von ungesättigten Ölen, Alkydharzen oder Epoxyesterharzen bekannt.
Aus FR-PS 1 509 692 sind ferner wasserlösliche Überzugsmittel bekannt, die durch Reaktion von Polymeren oder Copolymeren konjugierter Diene mit einer $\alpha, \beta$-ungesättigten Verbindung und Umsetzung des gebildeten Additionsproduktes mit
wäßrigen Basen hergestellt werden. Solchen Überzugsmitteln
haftet generell der Nachteil der überhöhten Sauerstoffreaktivität an. Einerseits neigen sie schon während der Lagerung
in starkem Maße zu Hautbildungen, andererseits zeigen die
auf Basis solcher Mittel hergestellten Überzüge sehr rasche
Oberflächentrocknung und damit eine ungenügende Durchhärtung, so daß den Filmen eine praxisgerechte Haftung völlig fehlt. Dadurch sind sie gegen mechanische Verletzungen sehr empfindlich und gewährleisten keinen ausreichenden Korrosionsschutz.

Der Erfindung liegt die Aufgabe zugrunde, ein wasserlösliches oder wasserdispergierbares Überzugsmittel insbesondere für die Elektrotauchlackierung bereitzustellen, das bei guter Haftfestigkeit, Schlagverformbarkeit und hoher Härte einen verbesserten Korrosionsschutz und verbesserten Umgriff aufweist.

Die Erfindung löst diese Aufgabe mit einem insbesondere anionisch abscheidbaren Überzugsmittel auf Basis eines nach Neutralisation mit einer organischen oder anorganischen Base wasserlöslichen oder wasserdispergierbaren polymeren Filmbildners, wobei das Überzugsmittel Wasser und gegebenenfalls weitere Zusätze enthält. Das Überzugsmittel der Erfindung ist dadurch gekennzeichnet, daß der polymere Filmbildner ein Copolymerisat aus einem konjugierten, 4 bis 8 Kohlenstoffatome aufweisenden Dien und einer copolymerisierbaren äthylenisch ungesättigten carboxylgruppentragenden Verbindung ist.

Geeignete Dien-Komponenten des Copolymerisats sind beispielsweise 1,3-Butadien, 2-Methylbutadien-1,3, 2,3-Dimethylbutadien-1,3, 1,3-Pentadien, 2,4-Hexadien oder Chloropren. Der Anteil des Diens im Copolymerisat beträgt 40 bis 90 Gew.-%. Vorzugsweise enthält das Copolymerisat 1,3-Butadien.

Das Copolymerisat enthält ferner ein copolymerisierbares äthylenisch ungesättigtes carboxylgruppenhaltiges Monomer. Geeignete Monomere sind beispielsweise Acryl- oder Methacrylsäure; Monovinyl- oder Monoallylester von Dicarbonsäuren wie Oxalsäure, Malonsäure, Bernsteinsäure, Maleinsäure, Fumarsäure, Phthalsäure oder Terephthalsäure. Ferner können z.B. Vinylessigsäure oder carboxysubstituiertes Styrol oder $\alpha$-Methylstyrol verwendet werden. Der Anteil dieses Monomeren im Copolymerisat beträgt 10 bis 60 Gew.-%. Vorzugsweise enthält das Copolymerisat Acryl- oder Methacrylsäure.

Die Carboxylgruppe des carboxylgruppenhaltigen Monomeren kann auch einer nachträglichen Verseifung eines Copolymeren aus dem Dienmonomeren und einem äthylenisch ungesättigten Estermonomeren entstammen. Als solche Monomere kommen die Ester der oben genannten Säuren in Betracht, wie z.B. Methylmethacrylat oder Butylmethacrylat.

Prinzipiell ist es auch denkbar, äthylenisch ungesättigte Monomere zu verwenden, die neben oder anstatt von Carboxygruppen andere Säuregruppen, wie z.B. Sulfonsäuregruppen, enthalten. Geeignete Monomere sind hierfür Äthylensulfonsäure und ihre Ester.

Die Wasserlöslichkeit oder Dispergierbarkeit des erfindungsgemäßen Überzugsmittels wird durch die mindestens teilweise Neutralisierung des Copolymerisats mit organischer oder anorganischer Base herbeigeführt. Beispiele geeigneter Basen sind organische Amine wie Äthylamin, Diäthylamin, Triäthylamin, Dimethylamin, Trimethylamin, Äthanolamin, Diäthanolamin, Triäthanolamin und N-Methylmorpholin. Des weiteren wäßriges Ammoniak oder anorganische Basen wie Natriumhydroxid oder Ammoniumcarbonat. Die Menge der Base wird so gewählt, daß sie ausreichend ist, um das Copolymerisat in Wasser löslich oder dispergierbar zu machen, wobei es vorteilhaft ist, einen pH-Wert der wäßrigen Lösung zwischen etwa 6 und 10 einzustellen.

Die Herstellung des Copolymerisats erfolgt nach übliche Methoden, zweckmäßig durch Lösungspolymerisation in organischen, gegebenenfalls geringe Mengen Wasser enthaltenden Lösungsmitteln unter Verwendung radikalischer Katalysatoren, beispielsweise Benzoylperoxid oder Azo-iso-butyronitril.

Die wasserlöslichen Salze der Copolymerisate können beispielsweise hergestellt werden, indem Basen mit diesem in Berührung gebracht werden. Es ist jedoch auch möglich, die Base bereits vor oder während der Polymerisation mit den Komponenten der Copolymerisate in Berührung zu bringen.

Das Herstellen der wäßrigen Lösung bzw. wäßrigen Dispersion des Salzes des Copolymerisats kann wiederum nach üblichen Methoden erfolgen. Eine geeignete Methode besteht beispielsweise darin, aus einer Lösung des Polymerisats in organischem Lösungsmittel und aus Wasser eine Dispersion herzustellen und diese dann mit der Base zu versetzen. Eine weitere geeignete Methode besteht z.B. darin, das Salz des Polymerisats als solches oder in Form seiner Lösung in organischem Lösungsmittel in Wasser einzubringen. Im allgemeinen ist es besonders zweckmäßig, die Arbeitsbedingungen insgesamt so zu wählen, daß die Gesamtmenge des Salzes in Form einer wäßrigen Lösung vorliegt oder eine größere Teilmenge in Form einer wäßrigen Lösung und eine kleinere Teilmenge in Form einer Dispersion. Es ist ferner im allgemeinen zweckmäßig, wenn der pH-Wert der Lösungen bzw. Dispersionen des Copolymerisats auf einen Wert von 6 bis 11, vorzugsweise von 7 bis 9, eingestellt ist.

Die wäßrigen Lösungen bzw. wäßrigen Dispersionen des salzartigen Copolymerisats bzw. Überzugsmittels können zusätzlich andere, in Wasser lösliche bzw. in Wasser dispergierbare und im Gemisch mit dem salzartigen Copolymerisat mittels Elektrophorese abscheidbare Bindemittel enthalten. Als solche eignen sich beispielsweise Phenoplastkondensate, Epoxidharze, Melaminharze, Alkydharze oder Gemische solcher Bindemittel. Die Gewichtsmenge dieser zusätzlichen anderen Bindemittel soll zweckmäßigerweise nicht größer sein als die Gewichtsmenge der salzartigen Copolsmerisate. Die Lösungen bzw. Dispersionen können ferner auch mittels Elektrophorese abscheidbare Hilfsstoffe enthalten, wie Pigmente, Härtungskatalysatoren und Mittel zur Verbesserung des Verlaufs.

Das erfindungsgemäße Überzugsmittel kann in pigmentierter oder nicht pigmentierter Form nach allen üblichen Auftragsverfahren verarbeitet werden.

Das Herstellen von Überzügen aus den wäßrigen Lösungen bzw. wäßrigen Dispersionen auf elektrisch leitenden, insbesondere metallenen Körpern erfolgt insbesondere mittels Elektrophorese durch elektrochemische Abscheidung und gegebenenfalls anschließendes Einbrennen. Auch hierbei kann nach üblichen Methoden gearbeitet werden, d.h. die Körper werden in die Lösungen bzw. Dispersionen eingebracht und als Anode geschaltet; ein weiteres elektrisch leitendes Medium wird ebenfalls in Berührung mit den Lösungen bzw. Dispersionen gebracht und als Kathode geschaltet.

Das Überziehen erfolgt zweckmäßig bei einer Gleichspannung von 2 bis 300, vorzugsweise 50 bis 200 Volt. Die Temperatur beträgt zweckmäßig 10 bis 50, vorzugsweise 20 bis 40 °C. Die Zeit des Überziehens beträgt im allgemeinen etwa 0,5 bis 3 Minuten. Nach dem Auftragen der Überzüge werden die überzogenen Körper aus den Lösungen bzw. Dispersionen entfernt, mit Wasser gespült und zum Einbrennen der Überzüge 5 bis 180, vorzugsweise 20 bis 60 Minuten, auf Temperaturen von 100 bis 250°C, vorzugsweise 140 bis 180°C, gehalten.

Der mit dem erfindungsgemäßen Überzugsmittel hergestellte Film zeichnet sich besonders durch hohen Glanz, gute Chemikalien-, Wasser- und Korrosionsbeständigkeit aus. Es ist ein weiterer Vorteil des erfindungsgemäßen Überzugsmittels, daß durch geeignete Wahl der Polymerisationsbedingungen eine Optimierung des Copolymerisats möglich ist. So kann beispielsweise durch Variation des Gewichtsverhältnisses der Monomeren bei der Polymerisation die Ladungsdichte im Polymerisat beeinflußt werden. Dies hat einen besonderen Einfluß auf die spezifische Leitfähigkeit der wäßrigen Harzlösung und damit auf den Umgriff des Überzugsmittels bei der Beschichtung von kompliziert geformten Metallteilen.

Es ist ein weiterer wesentlicher Vorteil des erfindungsgemäßen Überzugsmittels, daß durch geeignete Wahl der Polymerisationsbedingungen das Molekulargewicht des Copolymerisats im Hinblick auf eine gute Filmoberfläche beim Härten des Überzuges eingestellt werden kann. Bekanntlich werden bei der elektrophoretischen Abscheidung große Gasmengen an den Elektroden frei, die eine Porosität des Films bewirken können. Diese Porosität muß durch einen geeigneten Verlauf des abgeschiedenen Films während des Härtungsvorgangs ausgeglichen werden. Für die Fähigkeit zum Verlauf ist in besonderer Weise die Viskosität des Copolymerisats entscheidend, die wiederum in entscheidendem Maße vom Molekulargewicht des Copolymerisats abhängt, das durch die Änderung von Monomerkonzentration, Initiatorkonzentration, Temperatur und eventuellen Zusatz von Überträgern stark beeinflußt werden kann. Ein besonderer Vorteil des erfindungsgemäßen Überzugsmittels ist außerdem die hohe Elastizität des abgeschiedenen Films, die in entscheidendem Maße auf dem hohen Anteil an Kohlenstoffdoppelbindungen in der Polymerkette innerhalb der Dienkomponente beruht. Die Elastizität ist besonders bei Lacküberzügen auf solchen Oberflächen von Vorteil, die einer späteren Verformung unterliegen. Darüberhinaus erübrigt der polymere Filmbildner des erfindungsgemäßen Überzugsmittels einen gesonderten Zusatz von Härtungsmitteln, da bei höherer Temperatur in Gegenwart von Luftsauerstoff eine Vernetzung über die in den Dieneinheiten vorliegenden Doppelbindungen eintritt.

Die Erfindung wird in den nachstehenden Beispielen näher erläutert.

Beispiel 1

In einem Glasreaktor werden 150 Gew.-Tle. Toluol, 2 Gew.-Tle. Azo-isobutyronitril, 20 Gew.-Tle. Acrylsäure und 100 Gew.-Tle. Butadien-1,3 zusammengegeben. Es wird 10 Stunden bei 65°C gerührt. Anschließend wird die Lösung am Rotationsverdampfer vom Lösungsmittel befreit und bei 50°C im Vakuum getrocknet.

50 Gew.-Tle. des Butadien/Acrylsäure-Copolymerisats werden mit 20 Gew.-Tln. Äthylenglykolmonobutyläther und 400 Gew.-Tln. vollentsalztem Wasser versetzt und mit Triäthylamin auf einen pH-Wert von 8 eingestellt. Aus der auf diese Weise hergestellten wäßrigen Lösung wird das Überzugsmittel mit einer Gleichspannung von 150 Volt auf einem als Anode geschalteten zinkphosphatierten Blech innerhalb von 2 Minuten abgeschieden. Der Film wird sodann 15 Minuten bei 185°C eingebrannt und bildet dann einen fest haftenden Belag auf der Metalloberfläche mit einer Schichtdicke von 20 /um.

Im Salzsprühtest nach DIN 50 021 zeigt das angeritzte Prüfblech nach 196 Stunden weniger als 1 mm Unterwanderung.

Beispiel 2

In einem Glasreaktor werden 150 Gew.-Tle. Toluol, 2 Gew.-Tle. Benoylperoxid, 20 Gew.-Tle. Methacrylsäure und 100 Gew.-Tle.

Butadien-1,3 zusammengegeben. Es wird 16 Stunden bei 75°C gerührt. Das Lösungsmittel wird am Rotationsverdampfer abgezogen und das Polymerisat im Vakuum bei 50°C getrocknet.

50 Gew.-Tle. des Butadien/Methacrylsäure-Copolymerisat werden mit 20 Gew.-Tln. Butylglykol und 400 Gew.-Tln. vollentsalztem Wasser versetzt und mit Diäthanolamin auf einen pH-Wert von 8,2 eingestellt.

Mit einer Gleichspannung von 180 Volt wird das Überzugsmittel auf einem alkaliphosphatierten Eisenblech, das als Anode geschaltet ist, innerhalb von 1,5 Minuten abgeschieden. Der Film wird 15 Minuten bei 185°C eingebrannt und bildet einen glänzenden, fest haftenden Belag auf der Metalloberfläche mit einer Schichtdicke von 22 µm. Im Salzsprühtest nach DIN 50 021 zeigt das angeritzte Prüfblech nach 240 Stunden weniger als 1 mm Unterwanderung.

Beispiel 3

100 Gew.-Tle. eines nach Beispiel 2 hergestellten Copolymerisats werden mit 15 Gew.-Tln. eines wasserverdünnbaren Phenolharzes, 30 Gew.-Tln. Butylacetat und 23 Gew.-Tln. Triäthylamin vermengt und mit voll entsalztem Wasser verdünnt, bis eine Lösung mit einem Feststoffgehalt von 15 % hergestellt ist. Aus dieser Lösung wird, wie unter Beispiel 2 beschrieben, ein Film auf einem Prüfblech abgeschieden und eingebrannt. Es zeigt im Salzsprühtest nach DIN 50 021 nach 240 Stunden weniger als 1 mm Unterwanderung.

Beispiel 4

100 Gew.-Tle. des in Beispiel 3 hergestellten Bindemittelgemisches aus Copolymerisat und Phenolharz werden mit 20 Gew.-Tln. Titandioxid, 5 Gew.-Tln. Aluminiumsilikat und 2 Gew.-Tln. Ruß vermengt und auf einem Dreiwalzenstuhl homogenisiert. Nach Neutralisierung mit 20 Gew.-Tln. Triäthylamin und Verdünnung mit vollentsalztem Wasser auf einen Feststoffgehalt von 15 % wird mit einer Gleichspannung von 200 Volt auf einem als Anode geschaltetem Prüfblech ein Überzug elektrophoretisch abgeschieden. Der Film wird 20 Minuten bei 180°C eingebrannt und hat eine Schichtdicke von 24 $\mu$m. Im Salzsprühtest nach DIN 50 021 zeigt das angeritzte Prüfblech nach 240 Stunden weniger als 1 mm Unterwanderung.

P a t e n t a n s p r ü c h e

1. Wäßriges, insbesondere anionisch abscheidbares Überzugsmittel auf Basis eines nach Neutralisation mit einer organischen oder anorganischen Base wasserlöslichen oder -dispergierbaren polymeren Filmbildners, enthaltend Wasser und gegebenenfalls weitere Zusätze, dadurch gekennzeichnet, daß der polymere Filmbildner ein Copolymerisat aus einem konjugierten, 4 bis 8 C-Atome aufweisenden Dien und einer copolymerisierbaren, äthylenisch ungesättigten, carboxylgruppentragenden Verbindung ist.

2. Überzugsmittel nach Anspruch 1, dadurch gekennzeichnet, daß das Copolymerisat aus 40 bis 90 % konjugiertem, 4 bis 8 C-Atome aufweisendem Dien und 10 bis 60 % copoly-merisierbarer, äthylenisch ungesättigter, carboxylgruppen-tragender Verbindung besteht.

3. Überzugsmittel nach den Ansprüchen 1 bis 2, dadurch gekennzeichnet, daß das konjugierte Dien 1,3-Butadien ist.

4. Überzugsmittel nach den Ansprüchen 1 bis 3, dadurch gekennzeichnet, daß die copolymerisierbare, äthylenisch ungesättigte Verbindung Acryl- oder Methacrylsäure ist.

0007649

Europäisches
Patentamt

**EUROPÄISCHER RECHERCHENBERICHT**

Nummer der Anmeldung

EP 79 20 0233

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CHEMICAL ABSTRACTS, Band 86, 1977 Seite 82, Zusammenfassung 108123g Columbus, Ohio, USA<br><br>& JP - A - 76 125119(TOA GOSEI CHEMICAL INDUSTRY CO. LTD.) 01-11-1976<br><br>* Zusammenfassung *<br><br>-- | 1-4 |
| X | US - A - 3 956 091 (O.D. STEPP)<br><br>* Ansprüche 1 und 2; Spalte 2, Zeilen 56-64 *<br><br>---- | 1-4 |

**KLASSIFIKATION DER ANMELDUNG (Int.Cl. 3)**

C 25 D 13/06
C 08 L 13/02

**RECHERCHIERTE SACHGEBIETE (Int. Cl. 3)**

C 25 D 13/06
C 08 L 13/02
C 08 C 19/36
C 09 D 3/36

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-11-1979 | DE ROECK |

EPA form 1503.1 06.78